# EUROPÄISCHE PATENTSCHRIFT

(11) **EP 4 273 313 B1**
(45) Veröffentlichungstag und Bekanntmachung des Hinweises auf die Patenterteilung: **30.07.2025**
(21) Anmeldenummer: 23167902.8
(22) Anmeldetag: 14.04.2023
(51) Int. Cl.: D04C 1/06, F16J 15/06, D04B 1/22, F16J 15/10

(54) **PROFILDICHTUNG UND VERFAHREN ZUR HERSTELLUNG EINER SOLCHEN PROFILDICHTUNG**
PROFILE SEAL AND METHOD OF MAKING SAME
JOINT PROFILÉ ET SON PROCÉDÉ DE FABRICATION

(30) Priorität: 02.05.2022 DE 202022102379 U
(43) Veröffentlichungstag der Anmeldung: 08.11.2023
(73) Patentinhaber: Cuylits Holding GmbH, 49593 Bersenbrück (DE)
(72) Erfinder: Rechtien, Nico, 49638 Nortrup (DE)
(74) Vertreter: Dr. Binder & Binder GbR

(56) Entgegenhaltungen:
- DE-A1- 102017 200 681
- GB-A- 1 603 731
- US-A- 5 979 287

## Beschreibung

Die Erfindung betrifft eine Profildichtung und ein Verfahren zur Herstellung einer solchen Profildichtung.

Aus der DE 203 14 238 U1 ist bereits eine Dichtung mit einer Schlauchform bekannt, die aus einem Kern aus gewebten Edelstahl-Federdrähten besteht. Der Kern ist dabei von einer röhrenförmigen, geflochtenen Hülle umgeben, die ihrerseits aus Glasfasergarnen besteht. In der Druckschrift ist auch offenbart, dass der Kern als eine schlauchförmige, geschlossene Schleife ausgebildet sein kann, die die Hülle stützt.

In der EP 0 502 579 B1 wird eine Dichtung für eine Herd- oder Ofentür mit einem gestrickten, rohrförmigen, federnden Metalldrahtinnenteil beschrieben. Das Innenteil ist dabei von einem zylindrischen oder rohrförmig geflochtenen Fiberglasmantel umgeben.

Ferner geht aus der US 2013/097937 A1 eine Dichtungsanordnung hervor, die einen röhrenförmigen Kern und einen den Kern umgebenden Mantel umfasst, wobei der Kern im Wesentlichen aus gestrickten, geflochtenen oder gewebten Metalldrähten besteht und aus Glasfasern hergestellt ist, die gestrickt oder verflochten sein können.

Die US 3,578,764 B betrifft darüber hinaus eine hitzebeständige Profildichtung für einen Ofen. Die Profildichtung hat einen geflochtenen Glasfasermantel, der um ein elastisches, rohrförmiges Metamaschen-Dichtelement aus Draht herum angeordnet ist. Zusätzlich wird ein Verfahren zur Herstellung der Dichtung offenbart, das die Schritte des Flechtens des Glasfasermantels um den Drahtgestrickkern oder um einen Papierkern umfasst.

Somit lässt sich feststellen, dass bislang bekannte Profildichtungen zumeist mit einem metallischen Innenteil ausgestattet sind, welches von einem Schlauchmantel umgeben ist, der zum Teil aus Glasfasermaterialien besteht. Ein metallischer Kern kann jedoch unter Umständen korrodieren. Zudem ist es bei den bislang bekannten Profildichtungen, bei denen keine unterschiedliche Farbgebung zwischen Innenteil und Schlauchmantel gegeben ist, so, dass ein Verschleiß nicht oder nur sehr schwer optisch wahrnehmbar ist. Dieser Umstand stellt ein erhebliches Gefahrenpotential dar, wenn man beispielsweise an eine verschlissene Dichtung einer Ofentür denkt, deren Verschleiß nicht rechtzeitig erkannt wird. Hier können im Extremfall unbemerkt gesundheitsgefährdende Gase des Verbrennungsprozesses austreten, was unbedingt vermieden werden sollte.

Darüber hinaus ist es ganz allgemein auch bekannt, das Voranschreiten abnutzungsbedingten Verschleißes dadurch anzuzeigen, dass nach Abtragung einer Oberfläche oder einer Schutzschicht eine in ihrer Farbgebung abweichende Schicht sichtbar wird. So beschreibt beispielsweise die DE 699 22 410 T2 einen Alterungsanzeiger für einen Scheibenwischer, der aus einem Aufkleber besteht. Dieser Aufkleber wird mit einer Klebeschicht am Scheibenwischer befestigt, wobei durch mechanische und witterungsbedingte Einflüsse dieser Aufkleber zerstört wird. Nachdem sich dieser als obere Schicht zu betrachtende Aufkleber aufgelöst hat, erscheint eine Druckfarbenschicht mit einer Signalfarbe, welche das Erfordernis des Auswechselns des Scheibenwischers anzeigt.

Eine andere Verschleißanzeige geht darüber hinaus aus der WO 98/04776 A1 am Beispiel einer Papierverarbeitungsmaschine hervor. In dieser Druckschrift ist ein Dichtungsstreifen mit einer Verschleißanzeige offenbart, bei der in den Dichtungsstreifen eine Bohrung eingebracht ist, die übereinander mit verschieden farbigen Materialien verfüllt ist. In der Tiefe der Bohrung ist ein rotes Material, darüber ist gelbes Material vorhanden und im Bereich der Öffnung der Bohrung, also an der Dichtfläche, ist grünes Material vorgesehen. Dementsprechend kann hier eine optische Überprüfung des fortschreitenden Verschleißzustandes erfolgen. Die Dichtung muss spätestens ausgewechselt werden, wenn das rote Material sichtbar wird. Die Dichtstreifen sind dabei in einer Nut eines Aufnahmekörpers aufgenommen, wobei ein federnder Ringkörper die Dichtstreifen nachstellt.

Den bislang bekannten Verschleißanzeigen ist gemein, dass ihr Aufbau oder ihre Herstellung aufwendig ist und sie wenig flexibel einsetzbar sind.

Weiterhin beschreibt die Druckschrift DE 10 2017 200 681 A1 eine gattungsgemäße Profildichtung mit einem als gestrickte Kordel ausgeführten Polymerinlay (=Innenteil) und einer dieses umgebenden Faserschicht (=Schlauchmantel). Die Faserschicht kann ein Textil oder ein Metallgewebe sein, beispielsweise ein Gestrick, ein Vlies oder ein Geflecht. Zwischen dem Polymerinlay und der Faserschicht kann auch eine metallisch federnde Zwischenschicht angeordnet sein, die als gestrickte Drahtschicht ausgeführt ist. Die äußere Faserschicht, also der Schlauchmantel, kann imprägniert werden, wobei die Imprägnierung dazu genutzt werden kann, die gesamte Dichtung in einer gewünschten Farbe zu gestalten. Der Kern dieser Druckschrift ist es jedoch, eine Dichtung für besonders hohe Temperaturen bereitzustellen, wie dies zum Beispiel in Backöfen mit Pyrolysefunktion zur Reinigung bei über 400°C auftritt.

Als weiteren Stand der Technik wird noch auf die Druckschriften GB 1 603 731 A und US 5 979 287 A verwiesen.

Der Erfindung liegt die Aufgabe zugrunde, eine fertigungstechnisch einfache Profildichtung bereitzustellen, die an unterschiedliche Gegebenheiten angepasst werden kann und zudem eine zuverlässige, optische Verschleißanzeige ermöglicht. Ferner ist ein Verfahren zur Herstellung einer derartigen Profildichtung anzugeben.

Die Erfindung löst diese Problemstellung mit den Merkmalen der unabhängigen Patentansprüche 1 und 5. Weitere Ausgestaltungen der Erfindung sind Gegenstand der sich jeweils anschließenden Unteransprüche.

Demnach wurde eine Profildichtung mit einem als gestrickte Kordel ausgeführten Innenteil, das entweder mit einem Schlauchmantel umflochten oder der Schlauchmantel um die Kordel gestrickt ist, wobei das Innenteil eine andere Farbe aufweist, als der das Innenteil umhüllende Schlauchmantel, erfindungsgemäß dahingehend weitergebildet, dass das Innenteil als mit einer Signalfarbe gefärbte Kordel ausgeführt ist, sodass bei örtlich zerstörtem Schlauchmantel das dadurch sichtbare Innenteil eine Verschleißanzeige der Profildichtung bildet, wobei die Verschleißanzeige rein optisch erfolgt und somit keine Sensoren oder andere aufwändige Maßnahmen erforderlich sind, um den eintretenden Verschleiß zu signalisieren.

Der Umstand, dass bei der Erfindung eine gestrickte Kordel als Innenteil mit einem umflochtenen oder um die Kordel gestrickten Schlauchmantel kombiniert wird, führt auf einfache Weise zu einer biegsamen Profildichtung, die sich optimal an die Oberflächen der abzudichten Gegenstände angelegt und auch problemlos um Eckbereiche herumgelegt werden kann. So kann die erfindungsgemäße, Profildichtung beispielsweise im Ofenbau zum Beispiel zur Abdichtung von Ofenrohren verwendet werden. Sie ist jedoch in besonderer Weise auch für die Abdichtung von Ofentüren geeignet. Durch die vom Schlauchmantel abweichende Farbgebung des Innenteils wird auf einfache Weise eine Verschleißanzeige ermöglicht, die mit geringem Fertigungsaufwand umsetzbar ist und zuverlässig funktioniert, sodass diese auch hohen Sicherheitsanforderungen entspricht.

Entsprechend einer ersten Ausgestaltung der Erfindung wird vorgeschlagen, dass der Schlauchmantel aus Basaltfasern oder Glasfasern besteht. Basaltfasern sind nicht entflammbar und verfügen über eine hohe Abriebfestigkeit, was für den erfindungsgemäßen Zweck von erheblichem Vorteil ist. Sie verfügen zudem über einen hohen Schallabsorptionsgrad. Ihre chemische Beständigkeit gegenüber Säuren und organischen Lösungsmitteln ist bestens geeignet, sie für die unterschiedlichsten Dichtungszwecke zu verwenden. Ein weiterer Vorteil der Basaltfasern besteht ferner darin, dass diese von Natur aus eine sehr dunkle Farbe aufweisen, nämlich das so genannte Basaltgrün, und sich damit ohne das Erfordernis einer zusätzlichen Farbgebung deutlich von dem Innenteil der flexiblen Profildichtung unterscheiden.

Erfindungsgemäß ist vorgesehen, dass das Innenteil mit einer Signalfarbe eingefärbt ist oder eine derartige Farbgebung aufweist. Bei der Signalfarbe kann es sich beispielsweise um eine rote oder zum Beispiel um eine leuchtend grüne oder gelbe Farbe handeln, wobei andere Farben und insbesondere Signalfarben selbstverständlich im Bereich der Erfindung liegen.

Bei der Verwendung von Glasfasern sind einige Besonderheiten zu beachten, wenn diese gestrickt werden, da Glasfasern von Natur aus sehr brüchig sind. Aus diesem Grund geht eine sehr vorteilhafte Maßnahme der Erfindung dahin, dass die das Innenteil bildende, gestrickte Kordel aus mit einer Schlichte beschichteten Glasfasern besteht.

Als Glasfasern können im Rahmen der Erfindung in vorteilhafter Weise zum Beispiel Garne oder Zwirne aus E-Glas, C-Glas, AR-Glas, ECR-Glas, S-Glas, R-Glas, D-Glas oder Quarzglas verwendet werden. Diese sind nicht brennbar, frei von Alterungserscheinungen, verrottungsfest und weisen zudem eine gute thermische und elektrische Isolationswirkung sowie eine hohe Zugfestigkeit auf. Diese für die Erfindung sehr wesentlichen Eigenschaften werden noch dadurch ergänzt, dass die genannten Materialien nicht hygroskopisch und als Endlosfasern herstellbar sind.

Darüber hinaus ist es auch von Vorteil, wenn die Profildichtung insgesamt eine hohe thermische Beständigkeit aufweist. Dadurch wird eine universell einsetzbare Profildichtung geschaffen, die für eine große Bandbreite von Einsatzgebieten verwendbar ist. Eine zusätzliche Imprägnierung ist möglich und bringt weitere Vorteile mit sich. Durch die Imprägnierung wird zum Beispiel die Beständigkeit der Profildichtung gegen mechanische Beanspruchung, wie zum Beispiel Abrieb, verbessert. Gleichzeitig werden die Profildichtungen fester und kompakter. Die Ausprägungen sind aber je nach Bauart und Imprägnierung sehr unterschiedlich. Alle eingesetzten Imprägnierungen sind frei von Lösemitteln. Je nach Zusammensetzung sind organische Bestandteile enthalten.

Das Herstellungsverfahren einer derartigen, Profildichtung gestaltet sich derart, dass zunächst die das Innenteil bildende Kordel gestrickt wird. Im Anschluss hieran erfolgt bevorzugt zunächst die Farbgebung der Kordel mit der Signalfarbe, was beispielsweise durch ein Tauchverfahren in besonders vorteilhafter Weise möglich ist. Darauffolgend wird in einem dritten Verfahrensschritt um die Kordel herum der Schlauchmantel geflochten, dessen Farbe erfindungsgemäß deutlich von der Farbe des Innenteils abweicht. Selbstverständlich kann der Werkstoff, der zur Herstellung der als Innenteil verwendeten Kordel zum Einsatz kommt, auch nach seiner Verarbeitung, das heißt, nach dem Stricken, eingefärbt werden. Die Farbgebung der Kordel kann neben dem bereits erwähnten Tauchverfahren auch durch ein Spritzverfahren erfolgen. Wie zuvor bereits ausgeführt wurde, kann der Schlauchmantel auch um die Kordel gestrickt oder geflochten werden.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

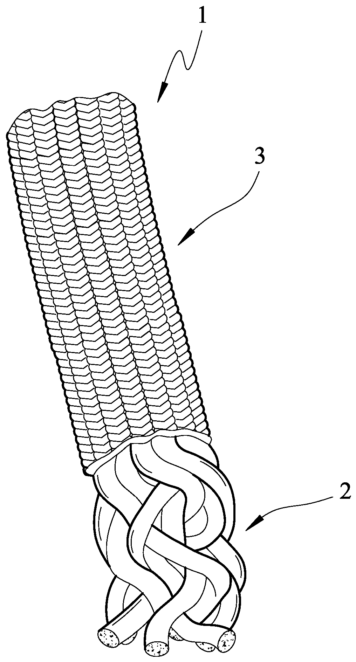

Um die erfindungsgemäße Funktionsweise veranschaulichen zu können, ist in der Figur nur eine stark vereinfachte Prinzipdarstellung gezeigt, bei der auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Die Figur zeigt eine Profildichtung 1, die ein Innenteil 2 aufweist. Bei dem Innenteil 2 handelt es sich vorliegend um eine aus Glasfasern gestrickte Kordel. Nach der Herstellung der gestrickten Kordel 2 erfolgt eine Einfärbung der Kordel 2 mit einer Signalfarbe, was beispielsweise in einem Tauchbad erfolgen kann. Abschließend wird das als Kordel ausgeführte Innenteil 2 mit einem Schlauchmantel 3 aus Basaltfasern umflochten. Der aus Basaltfasern bestehende Schlauchmantel 3 weist naturgemäß eine sehr dunkle und damit von der Farbe des Innenteils 2 deutlich abweichende Farbgebung auf. Dies hat zur Folge, dass bei sich einstellendem Verschleiß des Schlauchmantels 3 das darunter liegende Innenteil 2 mit einer Signalwirkung sichtbar wird, sodass dadurch eine Verschleißanzeige gebildet ist. Die Profildichtung 1 muss in diesem Fall ausgetauscht werden. Der wesentliche Vorteil einer derartigen Profildichtung 1 besteht darin, dass die Verschleißanzeige rein optisch verfolgt und somit zum Beispiel keine Sensoren oder andere aufwändige Maßnahmen erforderlich sind, um den eintretenden Verschleiß zu signalisieren. Die gesamte Profildichtung ist fertigungstechnisch einfach herstellbar und dennoch sehr wirkungsvoll.

### BEZUGSZEICHENLISTE

- 1: Profildichtung
- 2: Innenteil
- 3: Schlauchmantel

## Patentansprüche

1. Profildichtung (1) mit einem als gestrickte Kordel ausgeführten Innenteil (2), das entweder mit einem Schlauchmantel (3) umflochten oder der Schlauchmantel (3) um die Kordel gestrickt ist,
wobei das Innenteil (2) eine andere Farbe aufweist, als der das Innenteil (2) umhüllende Schlauchmantel (3),
**dadurch gekennzeichnet, dass**
das Innenteil (2) als mit einer Signalfarbe gefärbte Kordel ausgeführt ist sodass bei örtlich zerstörtem Schlauchmantel (3) das dadurch sichtbare Innenteil (2) eine Verschleißanzeige der Profildichtung (1) bildet, wobei die Verschleißanzeige rein optisch erfolgt und somit keine Sensoren oder andere aufwändige Maßnahmen erforderlich sind, um den eintretenden Verschleiß zu signalisieren.

2. Profildichtung (1) nach Anspruch 1,
**dadurch gekennzeichnet, dass**
der Schlauchmantel (3) aus Basaltfasern oder Glasfasern besteht.

3. Profildichtung (1) nach einem der vorstehend genannten Ansprüche,
**dadurch gekennzeichnet, dass**
die das Innenteil (2) bildende, gestrickte Kordel aus Garnen oder Zwirnen aus E-Glas, C-Glas, AR-Glas, ECR-Glas, S-Glas, R-Glas, D-Glas oder Quartzglas besteht.

4. Profildichtung (1) nach einem der vorstehend genannten Ansprüche,
**dadurch gekennzeichnet, dass**
die Profildichtung (1) insgesamt eine thermische Beständigkeit aufweist.

5. Verfahren zur Herstellung einer Profildichtung (1) nach einem der vorstehend genannten Ansprüche,
**gekennzeichnet durch** die Verfahrensmerkmale:
- Stricken der das Innenteil (2) bildenden Kordel,
- Farbgebung der Kordel mit der Signalfarbe,
- Herstellung des gestrickten oder geflochtenen Schlauchmantels (3) um die Kordel herum, wobei die Farbe des Schlauchmantels (3) von der Farbe des Innenteils (2) abweicht.

6. Verfahren nach Anspruch 5,
**dadurch gekennzeichnet, dass**
die Farbgebung der Kordel durch ein Tauchverfahren in einem Tauchbad mit der Signalfarbe erfolgt.

7. Verfahren nach Anspruch 5 oder 6,
**dadurch gekennzeichnet, dass**
die Farbgebung der Kordel durch ein Spritzverfahren erfolgt.

## Claims

1. Profile seal (1) having an inner part (2) which is in the form of a knitted cord and which either is surrounded by a braided tubular jacket (3) or has a tubular jacket (3) knitted around the cord,
wherein the inner part (2) has a different colour than the tubular jacket (3) enveloping the inner part (2), **characterized in that**
the inner part (2) is in the form of a cord coloured with a signal colour, so that, in the event of the tubular jacket (3) being locally destroyed, the consequently visible inner part (2) forms a wear indicator of the profile seal (1), wherein a purely optical wear indicator is involved and thus no sensors or other elaborate measures are required to signal the wear that occurs.

2. Profile seal (1) according to Claim 1,
**characterized in that**
the tubular jacket (3) consists of basalt fibres or glass fibres.

3. Profile seal (1) according to either of the preceding claims,
**characterized in that**
the knitted cord forming the inner part (2) consists of yarns or twines composed of E glass, C glass, AR glass, ECR glass, S glass, R glass, D glass or quartz glass.

4. Profile seal (1) according to one of the preceding claims,
**characterized in that**
the profile seal (1) has thermal resistance overall.

5. Method for producing a profile seal (1) according to one of the preceding claims,
**characterized by** the method features of:
- knitting the cord which forms the inner part (2),
- colouring the cord with the signal colour,
- producing the knitted or braided tubular jacket (3) around the cord, wherein the colour of the tubular jacket (3) is different from the colour of the inner part (2).

6. Method according to Claim 5,
**characterized in that**
the colouring of the cord is realized by a dip process in a dip bath with the signal colour.

7. Method according to Claim 5 or 6,
**characterized in that**
the colouring of the cord is realized by a spraying process.

## Revendications

1. Joint profilé (1) avec une partie intérieure (2) réalisée sous forme de cordon tricoté, qui est soit entourée d'une gaine tubulaire (3), soit tricotée autour de la gaine tubulaire (3),
la partie intérieure (2) présentant une couleur différente de celle de la gaine tubulaire (3) qui enveloppe la partie intérieure (2),
**caractérisé en ce que**
la partie intérieure (2) est réalisée sous forme de cordon teinté dans une couleur de signalisation, de sorte que, lorsque la gaine tubulaire (3) est localement détruite, la partie intérieure (2) ainsi visible forme un indicateur d'usure du joint profilé (1), l'indicateur d'usure étant purement optique et ne nécessitant donc aucun capteur ni autre dispositif complexe pour signaler l'usure.

2. Joint profilé (1) selon la revendication 1,
**caractérisé en ce que**
la gaine tubulaire (3) est constituée de fibres de basalte ou de fibres de verre.

3. Joint profilé (1) selon l'une des revendications précédentes,
**caractérisé en ce que**
le cordon tricoté formant la partie intérieure (2) est constitué de fils ou de fils retordus en verre E, verre C, verre AR, verre ECR, verre S, verre R, verre D ou verre quartz.

4. Joint profilé (1) selon l'une des revendications précédentes,
**caractérisé en ce que**
le joint profilé (1) présente dans son ensemble une résistance thermique.

5. Procédé de fabrication d'un joint profilé (1) selon l'une des revendications précédentes,
**caractérisé par** les caractéristiques de procédé suivantes :
- tricotage du cordon formant la partie intérieure (2),
- coloration du cordon avec la couleur de signalisation,
- fabrication de la gaine tubulaire tricotée ou tressée (3) autour du cordon, la couleur de la gaine tubulaire (3) étant différente de la couleur de la partie intérieure (2).

6. Procédé selon la revendication 5,
**caractérisé en ce que**
la coloration du cordon est réalisée par immersion dans un bain de couleur de signalisation.

7. Procédé selon la revendication 5 ou la revendication 6,
**caractérisé en ce que**
la coloration du cordon est réalisée par pulvérisation.
